(19)

Europäisches Patentamt
European Patent Office
Office européen des brevets

(11) **EP 4 043 136 B1**

(12) **EUROPEAN PATENT SPECIFICATION**

(45) Date of publication and mention
of the grant of the patent:
**27.05.2026  Bulletin 2026/22**

(21) Application number: **22156427.1**

(22) Date of filing: **11.02.2022**

(51) International Patent Classification (IPC):
**B23K 1/002** *(2006.01)*       **B23K 3/03** *(2006.01)*
**B23K 3/047** *(2006.01)*      **B23K 13/01** *(2006.01)*
**B23K 13/08** *(2006.01)*      **G05D 23/19** *(2006.01)*
**H05B 6/06** *(2006.01)*

(52) Cooperative Patent Classification (CPC):
**B23K 1/002; B23K 3/033; B23K 3/0475;**
**B23K 13/01; B23K 13/08; G05D 23/19; H05B 6/06**

(54) **SYSTEM FOR CONTROLLING HEATING OF A WORKPIECE**

SYSTEM ZUR STEUERUNG DER ERWÄRMUNG EINES WERKSTÜCKS

SYSTÈME DE CONTRÔLE DU CHAUFFAGE D'UNE PIÈCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.02.2021  US 202117175812**

(43) Date of publication of application:
**17.08.2022  Bulletin 2022/33**

(73) Proprietor: **Illinois Tool Works, Inc.
Glenview, Illinois 60025 (US)**

(72) Inventors:
• **ANDERSON, Dylan**
  **Glenview, 60025 (US)**
• **MEHN, Peter**
  **Glenview, 60025 (US)**

(74) Representative: **HGF
HGF Limited
4th Floor, 1 City Square
Leeds LS1 2ES (GB)**

(56) References cited:
**WO-A1-2021/035146    US-A- 4 674 027
US-A- 5 634 961       US-A1- 2015 334 781
US-B1- 6 713 737**

**Description**

The present invention relates to heating a workpiece for welding, and more particularly, to a system for controlling heating of a workpiece according to the preamble of claim 1 (see for example US 2015/334781 A1).

Induction heating is a method for producing heat in a localized area on a susceptible metallic object. Induction heating involves applying an AC electric signal to a heating loop or coil placed near a specific location on or around the metallic object to be heated. The varying or alternating current in the loop creates a varying magnetic flux within the metal to be heated. Current is induced in the metal by the magnetic flux, thus heating it. Induction heating may be used for many different purposes including curing adhesives, hardening of metals, brazing, soldering, and other fabrication processes in which heat is a necessary or desirable agent.

Limitations and disadvantages of conventional systems for heating a workpiece for welding will become apparent to one of skill in the art, through comparison of such approaches with some aspects of the present method and system set forth in the remainder of this disclosure with reference to the drawings.

Prior patent document WO2021035146A1 (state of the art according to Article 54(3) EPC) describes an example of a system for controlling heating of a workpiece that includes an interface to receive a target temperature (TT) for the workpiece. In the system, a processor is configured to determine, based on monitoring outputs of temperature sensor(s), a current highest temperature (TH) for the workpiece and set a control temperature (TC) based on the received target temperature and the current highest temperature. In the system, a control system is configured to heat the workpiece to substantially the control temperature (TC) by turning on a heating device, and turning off the heating device when the workpiece reaches substantially the control temperature (TC). The processor is further configured to characterize a temperature ramp rate based on a measured temperature overshoot at the workpiece after turning off the heating device, and the control system is configured to heat the workpiece to the received target temperature (TT) by controlling the heating device based on the temperature ramp rate.

SUMMARY

According to a first aspect of the present invention a system for controlling heating of a workpiece is defined in claim 1.

Further preferred embodiments of the present invention are defined in the dependent claims.

BRIEF DESCRIPTION OF THE DRAWINGS

These and/or other aspects will become apparent and more readily appreciated from the following description of some various aspects of examples of the disclosure, taken in conjunction with the accompanying drawings.

FIG. 1 is a high-level block diagram of an example heating system, in accordance with aspects of the disclosure.
FIG. 2 shows a block diagram of an example control circuitry, in accordance with aspects of the disclosure.
FIG. 3 shows a flow diagram representative of example machine readable instructions, which may be executed by the example control circuitry of FIGS. 1 and/or 2 to implement the example heating system of FIG. 1.
FIG. 4 shows a detailed flow diagram representative of example machine readable instructions, which may be executed by the example control circuitry of FIGS. 1 and/or 2 to implement the example heating system of FIG. 1.
FIG. 5 shows a flow diagram representative of example machine readable instructions in accordance with an embodiment of the invention, which may be executed by the example control circuitry of FIGS. 1 and/or 2 to implement the example heating system of FIG. 1.

The figures are not necessarily to scale. Where appropriate, similar or identical reference numbers are used to refer to similar or identical components.

DETAILED DESCRIPTION

Various examples of the disclosure improve heating of a workpiece (e.g., a workpiece to be welded, brazed, etc.) to a target temperature by improving the accuracy of the heated workpiece temperature. For example, when working with smaller workpieces, a workpiece may be easily overheated by conventional heating systems because of the lower thermal mass of such workpieces. In some cases, overheating can damage the workpiece and/or delay performance of the welding operation. Therefore, conventional methods to avoid overheating the workpiece involve an operator closely attending to heating of the workpiece for welding, which may lead to inefficient use of time. When the workpiece is not sufficiently heated (e.g., is heated to less than the target temperature to avoid overheating), extra time may be needed for the actual welding process since the workpiece now needs additional time to be heated to the required temperature. Insufficient heating may lead to greater chances of failed weld, and may result in rejection of a weld done according to a weld procedure specification (WPS).

Therefore, when using, for example, a thermostatically controlled induction heating system to bring a workpiece to a desired temperature, users must be vigilant to ensure that undesired overheating does not occur due to the improper placement or slow response of a temperature sensing device. Monitoring can be particularly important when a heating capacity of a heating device, such as, for example, an induction heating device, exceeds what is required to heat a given workpiece and results in very short heating times.

The situations described above can occur, for example, where users are heating a workpiece with a small thermal mass and/or while using a temperature sensing device that may be poorly thermally coupled to the workpiece (e.g., armored temperature sensing device, temperature sensing device not tightly placed against the workpiece, etc.). However, overheating and/or poor thermal coupling may occur with workpieces of any size.

In the disclosed examples, the user need not manually calculate and set power limits to reduce the temperature overshoot when heating a workpiece. By increasing the accuracy of heating the workpiece and reducing the overshoot of poorly thermally coupled temperature sensing devices, the user can better make use of temperature sensing devices such as, for example, armored temperature sensing devices in various situations, which can result in quicker setup for the user. Disclosed example systems and methods can also aid in reducing wear on heating tools by limiting potential temperature overshoot past safe tool operating limits.

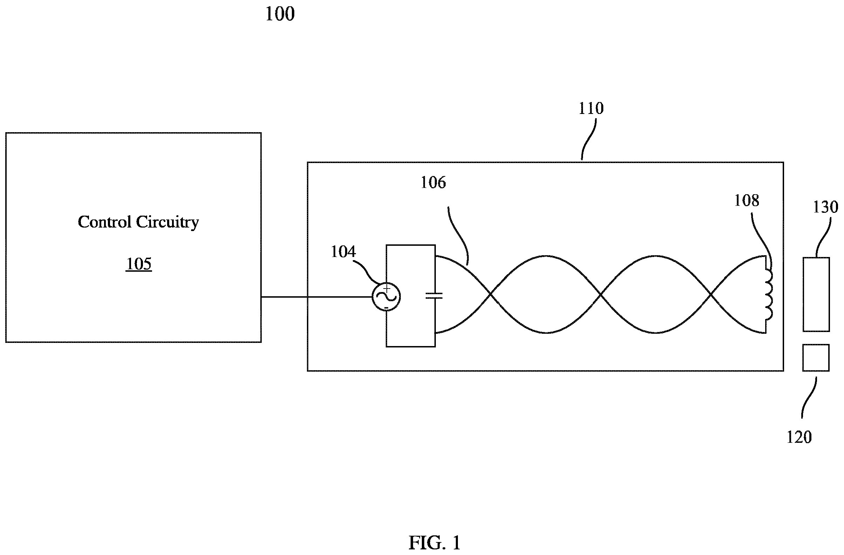

FIG. 1 is a high-level block diagram of an example heating system. Referring to FIG. 1, there is shown a heating system 100 that comprises a control circuitry 105 configured to control a heating device 110 suitable for heating a workpiece 130, and sensors 120 suitable for monitoring a temperature of the workpiece 130. The heating system 100 may use any type of a heating system, and an example heating system may be an induction heating system.

Accordingly, the example heating device 110 is described in this disclosure for the heating system 100. The heating device 110 comprises induction heating power supply 104, conductors 106, and a heating coil 108. The heating system 100 is configured to provide power from the induction heating power supply 104 to the heating coil 108 via the conductors 106. The heating coil 108 is magnetically coupled to the workpiece 130 that is to be heated via the heating device 110. In operation, the induction heating power supply 104 outputs power to the heating device 110 at a heating frequency, which transfers the power to the workpiece 130 to inductively heat the workpiece 130. The heating power supply 104 may be coupled to the heating device 110 via an extension cable.

The temperature of the workpiece 130 can be monitored at various locations by the sensors 120, which may comprise, for example, temperature sensors. The sensors 120 may be any type of sensors suitable for monitoring the temperature of a welding workpiece, such as, for example, armored temperature sensing devices or spot-welded sensing devices.

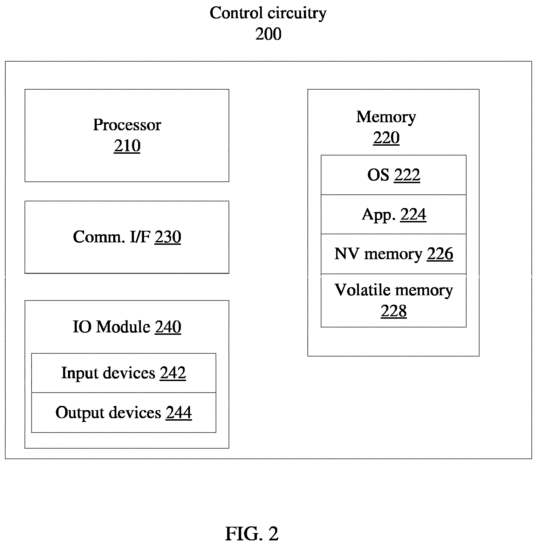

The control circuitry 105 is configured to monitor and control various functions. For example, the control circuitry 105 can monitor temperature information from the sensors 120 so that the heating device 110 can be controlled to appropriately control the temperature of the workpiece 130. The control circuitry 105 can also characterize, based on the received inputs from the sensors 120 and a user via a user interface (e.g., input devices 242 in FIG. 2), a temperature ramp rate for a workpiece so that it can be heated to the desired temperature without overheating the workpiece.

The control circuitry 105 comprises a hardware device capable of executing instructions to perform specific functions. Accordingly, the control circuitry 105 comprises any of a number of different types of processors, memory, logic circuitry, etc. for controlling the heating device 110.

An example heating coil 108 may include two or more conductors and a turn connector. The conductors (and, by extension, the heating coil 108) may be conformably wrapped around the workpiece 130 while the conductors are not electrically connected in series. The example heating coil 108 may comprise, for example, an induction heating blanket, an induction heating assembly, etc. The turn connector connects the two or more conductors in series to configure the first and second conductors as an inductor having two or more turns. The example heating coil 108 may include one or more electrical and/or thermal insulators to, for example, prevent short circuiting and/or protect the conductors from heat induced in the workpiece 130.

FIG. 2 shows a block diagram of an example control circuitry, in accordance with aspects of the disclosure. Referring to Figure 2, there is shown an example control circuitry 200 that may be used with various examples of the disclosure, and may be similar to the control circuitry 105 in FIG. 1. The control circuitry 200 may comprise, for example, a processor 210, memory 220, a communication interface 230, and an IO interface 240. The processor 210 may comprise, for example, one or more of processors (CPUs, GPUs, etc.), controllers, system on chips, ASICs, etc.

The memory 220 may include non-volatile memory 226 and volatile memory 228. The storage described for holding local data may be part of the memory 220 or comprise separate memory. The operating system 222 and applications 224 may be stored in, for example, the non-volatile memory 226, and may be copied to volatile memory 228 for execution by the processor 210. Various aspects of the disclosure may use different memory architectures that are design and/or implementation dependent. For example, some aspects of the disclosure may have the operating system 222 and applications 224 in the non-volatile memory 226 executed at least in part from the non-volatile memory 226.

The communication interface 230 may allow the control circuitry 200 to communicate with other devices via, for example, a wired protocol such as USB, Ethernet, Firewire, etc., or a wireless protocol such as Bluetooth, Near Field Communication (NFC), Wi-Fi, etc. The wired or wireless protocol may also be, for example, a proprietary protocol. The various types of radios for communication may be referred to as a transceiver for the sake of simplicity. The communication may be, for example, with various sensors and/or devices that can relay sensor data. The communication interface 230 may also be used to communicate with other networks such as local networks, cellular networks, etc. Additionally, the communication interface may allow various devices to plug into, for example, a USB ports. For example, a keyboard and/or a mouse may plug into their respective USB ports, or communicate wirelessly to a USB dongle that allows wireless communication with, for example, a wireless keyboard and/or mouse.

The control circuitry 200 may also comprise the IO module 240 for communication with a user via the input devices 242 and output information to be displayed on output devices 244. The input devices 242 may comprise, for example, switches, slide switches, membrane switches, buttons, touch sensitive screen, which may be a part of a display, a microphone, etc. The touch sensitive screen (touchscreen) may have soft buttons, switches, slide switches, keyboard, etc. that emulate their physical counterparts. The input devices 242 may also comprise, for example, a keyboard, a mouse, a trackball, etc., as well as various sensors, cameras, etc. The input devices 24 may additionally comprise, for example, bar code readers and/or other type of scanners that may be used to identify an object. The output devices 244 may comprise, for example, display(s), speaker(s), LED(s), vibration motor(s), etc. Some devices such as a touchscreen are able to provide both input and output functions of the IO module 240.

The processor 210 may operate using different architectures in different examples of the disclosure. For example, the processor 210 may use the memory 220 to store instructions to execute, or the processor 210 may have its own memory (not shown) for its instructions.

Various examples may use other architectures where the different functionalities may be grouped differently. For example, the functionalities may be in different integrated circuit chips, or different devices may be combined. For example, the IO module 240 and the communication interface 230 may be combined together. Additionally, the control circuitry 200 may refer logically to various physical devices. For example, one or more of the output devices 244 may be part of a different integrated circuit or on a different printed circuit board than one or more of the input devices 242.

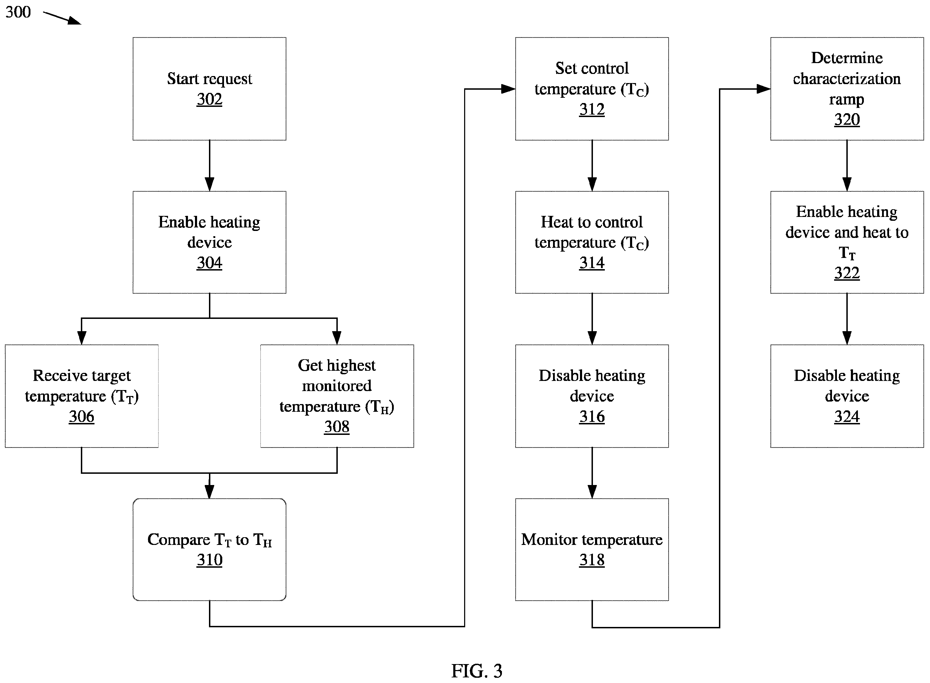

FIG. 3 shows a flow diagram representative of example machine readable instructions 300, which may be executed by the example control circuitry 105, 200 of FIGS. 1 and/or 2 to implement the example heating system 100 of FIG. 1. For example, the instructions 300, which may be in an application 224, may be executed by the processor 210 to control the heating device 110 to heat a workpiece 130 to a target temperature. An induction heating device is used as an example for the heating device 110, and it should be understood that various examples of the disclosure may use any type of heating device appropriate for a purpose such as, for example, welding.

In block 302, a start request for heating is received. In block 304, the heating device 110, for example, an induction heating device, is enabled. In block 306, a target temperature $T_T$ to which the workpiece 130 should be heated is received. The target temperature may be, for example, entered or selected by a user via the input devices 242 or received from another electronic device wirelessly and/or by wired communication via the communication interface 230. The workpiece 130 may also recognized by scanning an identification mark such as, for example, a bar code, with an input device 242, optically recognized by an application 224, etc., and then the target temperature looked up in, for example, a look-up table in the memory 220.

In block 308, the control circuitry 105 receives, wirelessly and/or via wire conductors, outputs from one or more sensors 120, each configured to monitor a temperatures at a location of the workpiece 130. The temperature monitoring may occur continuously or at some time interval. When the target temperature $T_T$ is received or determined, the control circuitry 105 will select the highest temperature $T_H$ for the workpiece 130 monitored via the sensors 120.

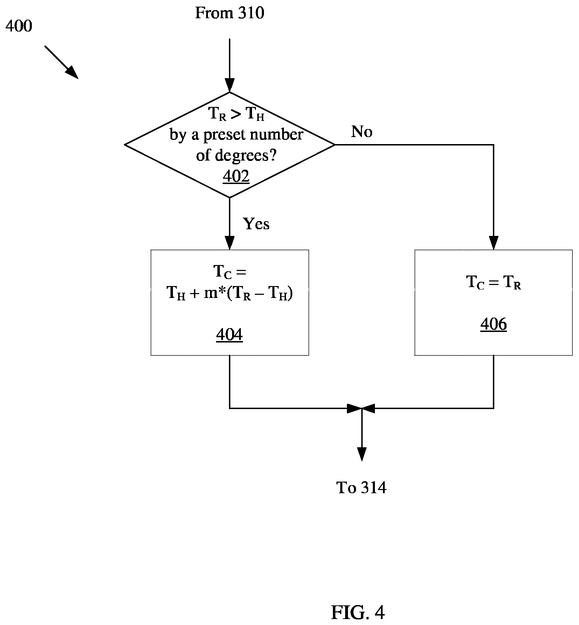

In block 310, the target temperature $T_T$ is compared to the highest temperature $T_H$. Depending on the result of the comparison, the control temperature $T_C$ is set in block 312. FIG. 4 describes block 312 in more detail.

In block 314, the heating device 110 heats the workpiece 130 to the control temperature $T_C$, or to substantially the control temperature $T_C$ as allowed by the heating system 100. "Substantially the control temperature $T_C$" may be a temperature within a pre-determined margin to the temperature $T_C$ that may be pre-determined for a given usage. The pre-determined margin may depend on various parameters, such as, for example, the type of metal being heated, the type of heating device 110, etc. Accordingly, "substantially the control temperature $T_C$" may be set by the processor 210, by the user using any of the input devices 242, or via commands received with the communication interface 230.

As examples, the margin for an application may be within 10% of the control temperature $T_C$ in one case, 5% of the control temperature $T_C$ in another case, 1% of the control temperature $T_C$ in another case, etc. Therefore, as the margin may differ for different cases, the specific margins given as examples above do not limit any examples of the disclosure.

When the heating system 100 monitors the sensors 120 periodically, the temperature of the workpiece 130 may be at a temperature that is below or above the control temperature $T_C$. The monitoring period may adjustable in some examples of the disclosure, while other examples of the disclosure may have a fixed monitoring period. The monitoring period used may be variable in some examples of the disclosure while other examples of the disclosure may have a fixed monitoring period. That is, the monitoring period may change while monitoring the workpiece 130 or the monitoring period may remain the same for a first workpiece 130 but may be changed for a second workpiece 130. The monitoring period may be timed via a software timer in, for example, the operating system 222 or the applications 224, or a hardware timer that may be a part of, for example, the control circuitry 105.

Some examples involve determining that the control temperature $T_C$ is reached when the temperature is within a temperature range. The temperature range may be fixed or variable depending on various parameters such as, for example, the interval at which the temperature of the workpiece is determined, the characteristics of the workpiece, etc.

In block 316, the control circuitry 105 disables the heating device 110 to stop heating the workpiece 130 when the highest temperature $T_H$ from any of the various sensors 120 indicates that the workpiece 130 has reached the control temperature $T_C$ or is at substantially the control temperature $T_C$.

In block 318, the control circuitry 105 monitors the continuing rise in overshoot temperature of the workpiece 130 based on the outputs of the sensors 120. Once the outputs of the sensors 120 indicate that the temperature of the workpiece 130 has peaked, the temperature overshoot, which is the difference in temperature from the control temperature $T_C$ to the peak temperature, and the overshoot time, which is the time period from when the heating device 110 is disabled to the workpiece 130 reaching its peak temperature, are determined.

In block 320, a temperature ramp rate is determined by, for example, the processor 210 of the control circuitry 105 based on the temperature overshoot and/or the overshoot time for use in heating the workpiece 130 to the target temperature $T_T$. The temperature ramp rate may be a linear ramp or a non-linear ramp. An example of a linear ramp may be, for example, increasing the control temperature $T_C$ for the workpiece 130 by a constant temperature amount per unit time until the target temperature $T_T$ is reached without overshooting beyond an acceptable margin. The control temperature $T_C$ may be increased, for example, periodically.

In some other examples, the control circuitry 105 controls the temperature of the heating device 110 periodically such that the temperature of the workpiece reaches substantially the target temperature $T_T$ without overshooting beyond an acceptable margin. "Substantially the target temperature $T_T$" may be a temperature within a margin to the target temperature $T_T$ that may be pre-determined for a given usage. The margin may depend on various parameters, such as, for example, the type of metal being heated, the type of heating device 110, etc. Accordingly, "substantially the target temperature $T_T$" may be set by the processor 210, by the user using any of the input devices 242, or via commands received with the communication interface 230.

As examples, the margin for an application may be within 5% of the target temperature $T_T$ in one case, 2% of the target temperature $T_T$ in another case, 1% of the target temperature $T_T$ in another case, etc. Therefore, as the margin may differ for different cases, the specific margins given as examples above do not limit any examples of the disclosure.

The heating period used may be variable in some examples of the disclosure while other examples of the disclosure may have a fixed period. That is, the heating period may change while heating the workpiece 130 or the heating period may remain the same for a first workpiece 130 but may be changed for a second workpiece 130. The heating period may be timed via a software timer in, for example, the operating system 222 or the applications 224, or a hardware timer that may be a part of, for example, the control circuitry 105.

A single timer may be used for monitoring the temperature of the workpiece 130 and for using the temperature ramp rate in heating the workpiece 130, or independent timers may be used. The workpiece 130 may be heated to an interim temperature $T_I$ that is raised, for example, periodically based on the temperature ramp rate.

In block 322, the control circuitry 105 enables the heating device 110 to heat the workpiece 130 to the target temperature $T_T$ using the temperature ramp rate. An example of the disclosure may increase a target temperature of the workpiece 130 to an interim temperature $T_I$ periodically until the interim temperature $T_I$ equals the target temperature $T_T$. Accordingly, the heating device 110 can heat the workpiece 130 according to the increasing interim temperature $T_I$ until the target temperature $T_T$ is reached.

In block 324, when the workpiece 130 reaches the target temperature $T_T$, or reaches substantially the target temperature $T_T$, the heating device 110 is disabled.

While an example flow diagram is shown in FIG. 3 for illustrative purposes, it should be understood that various other flow diagrams may also describe other examples of the disclosure. For example, in another example of the disclosure, the blocks 306 and 308 may happen serially in either order rather than in parallel as shown in FIG. 3.

FIG. 4 shows a detailed flow diagram representative of example machine readable instructions 300, which may be executed by the example control circuitry 105, 200 of FIGS. 1 and/or 2 to implement the example heating system of FIG. 1. The example instructions 400 may be performed to implement block 312 of FIG. 3 to set the control temperature $T_C$.

In block 402, the comparison of the target temperature $T_T$ to the current highest temperature $T_H$ performed by the processor 210 is used. In block 404, in an example algorithm in the application 224 executed by the processor 210, when the difference between the target temperature $T_T$ and the current highest temperature $T_H$ is larger than a threshold value $(T_R)$, the control temperature Tc is set to:

$$T_C = T_H + m*(T_R - T_H) \qquad \text{(Equation 1)}$$

where 'm' is less than or equal to 1 and greater than or equal to 0.

Some examples of the disclosure may set 'm' to be in the range of, for example, substantially 0.15 to substantially 0.75. An example of the disclosure may set 'm' to, for example, substantially 0.25. Furthermore, some examples of the disclosure may set the threshold value ($T_R$) to be in the range of, for example, substantially 10° C to substantially 50° C. An example of the disclosure may set the threshold value ($T_R$) to, for example, substantially 25° C.

In an example algorithm, when the difference between the target temperature $T_T$ and the current highest temperature $T_H$ is less than or equal to the threshold value (TH1), the control temperature $T_C$ is set by the processor 210 to the target temperature $T_T$:

$$T_C = T_T \qquad \text{(Equation 2)}$$

Accordingly, in some examples, the heating system 100 is configured to control the heating device 110 based on the received target temperature ($T_T$), the temperature ramp rate, and feedback based on the outputs of the sensors 120.

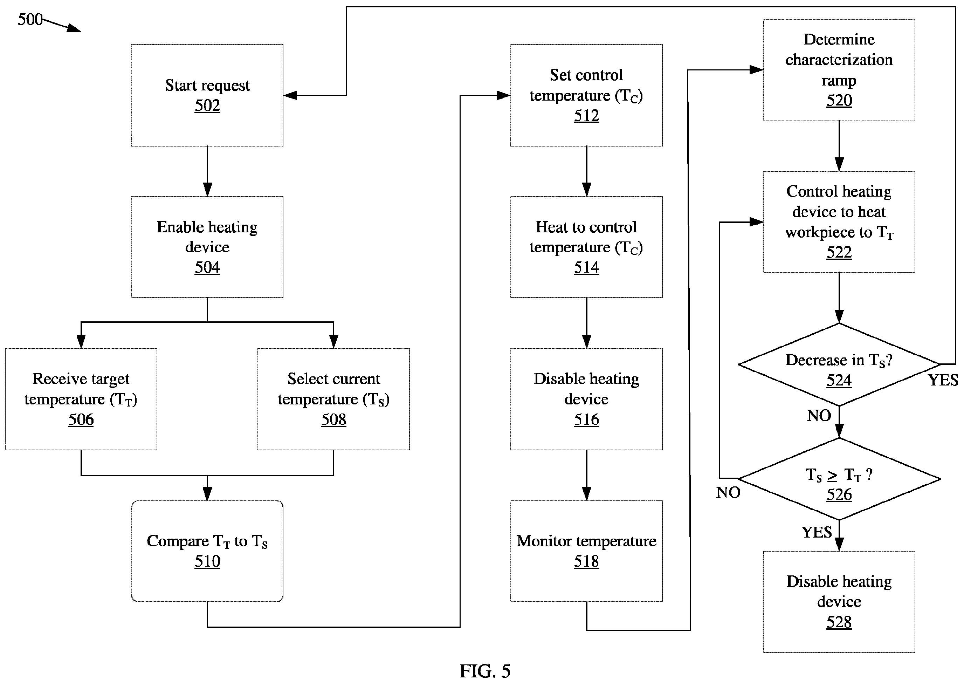

FIG. 5 shows a flow diagram representative of example machine readable instructions 500, which may be executed by the example control circuitry 105, 200 of FIGS. 1 and/or 2 to implement the example heating system 100 of FIG. 1. For example, the instructions 500, which may be in an application 224, may be executed by the processor 210 to control the heating device 110 to heat a workpiece 130 to a target temperature. An induction heating device is used as an example for the heating device 110, and it should be understood that various examples of the disclosure may use any type of heating device appropriate for a purpose such as, for example, welding.

In block 502, a start request for heating is received. In block 504, the heating device 110, for example, an induction heating device, is enabled. In block 506, a target temperature $T_T$ to which the workpiece 130 should be heated is received. The target temperature may be, for example, entered or selected by a user via the input devices 242 or received from another electronic device wirelessly and/or by wired communication via the communication interface 230. The workpiece 130 may also recognized by scanning an identification mark such as, for example, a bar code, with an input device 242, optically recognized by an application 224, etc., and then the target temperature looked up in, for example, a look-up table in the memory 220.

In block 508, the control circuitry 105 receives, wirelessly and/or via wire conductors, outputs from one or more sensors 120, each configured to monitor a temperatures at a location of the workpiece 130. The temperature monitoring may occur continuously or at some time interval. The control circuitry 105 selects a current temperature ($T_S$) for the workpiece 130 monitored via the sensors 120. The control circuitry 105 receives a selection of one or more of the sensors 120 (e.g., via the I/O module 240, the input devices 242) as a control sensor for characterization of the workpiece and/or control of heating. In some examples, the control circuitry 105 selects the current temperature (TS) as the highest observed temperature (e.g., the highest temperature $T_H$ of FIG. 3).

In block 510, the target temperature $T_T$ is compared to the selected current temperature $T_S$. Depending on the result of the comparison, the control temperature $T_C$ is set in block 512. Block 512 may be implemented using a process such as the process of FIG. 4, using the selected current temperature instead of the highest monitored temperature $T_H$.

In block 514, the heating device 110 heats the workpiece 130 to the control temperature $T_C$, or to substantially the control temperature $T_C$ as allowed by the heating system 100. "Substantially the control temperature $T_C$" may be a temperature within a pre-determined margin to the temperature $T_C$ that may be pre-determined for a given usage. The pre-determined margin may depend on various parameters, such as, for example, the type of metal being heated, the type of heating device 110, etc. Accordingly, "substantially the control temperature $T_C$" may be set by the processor 210, by the user using any of the input devices 242, or via commands received with the communication interface 230.

As examples, the margin for an application may be within 10% of the control temperature $T_C$ in one case, 5% of the control temperature $T_C$ in another case, 1% of the control temperature $T_C$ in another case, etc. Therefore, as the margin may differ for different cases, the specific margins given as examples above do not limit any examples of the disclosure.

When the heating system 100 monitors the sensors 120 periodically, the temperature of the workpiece 130 may be at a temperature that is below or above the control temperature Tc. The monitoring period may adjustable in some examples of the disclosure, while other examples of the disclosure may have a fixed monitoring period. The monitoring period used may be variable in some examples of the disclosure while other examples of the disclosure may have a fixed monitoring period. That is, the monitoring period may change while monitoring the workpiece 130 or the monitoring period may remain the same for a first workpiece 130 but may be changed for a second workpiece 130. The monitoring period may be timed via a software timer in, for example, the operating system 222 or the applications 224, or a hardware timer that may be a part of, for example, the control circuitry 105.

Some examples involve determining that the control temperature $T_C$ is reached when the temperature is within a temperature range. The temperature range may be fixed or variable depending on various parameters such as, for example, the interval at which the temperature of the workpiece is determined, the characteristics of the workpiece, etc.

In block 516, the control circuitry 105 disables the heating device 110 to stop heating the workpiece 130 when the highest temperature selected current temperature $T_S$ from any of the various sensors 120 indicates that the workpiece 130 has reached the control temperature $T_C$ or is at substantially the control temperature $T_C$.

In block 518, the control circuitry 105 monitors the continuing rise in overshoot temperature of the workpiece 130 based on the outputs of the sensors 120. Once the outputs of the sensors 120 indicate that the temperature of the workpiece 130 has peaked, the temperature overshoot, which is the difference in temperature from the control temperature $T_C$ to the peak temperature, and the overshoot time, which is the time period from when the heating device 110 is disabled to the workpiece 130 reaching its peak temperature, are determined.

In block 520, a temperature ramp rate is determined by, for example, the processor 210 of the control circuitry 105 based on the temperature overshoot and/or the overshoot time for use in heating the workpiece 130 to the target temperature $T_T$. The temperature ramp rate may be a linear ramp or a non-linear ramp. An example of a linear ramp may be, for example, increasing the control temperature $T_C$ for the workpiece 130 by a constant temperature amount per unit time until the target temperature $T_T$ is reached without overshooting beyond an acceptable margin. The control temperature Tc may be increased, for example, periodically.

In some other examples, the control circuitry 105 controls the temperature of the heating device 110 periodically such that the temperature of the workpiece reaches substantially the target temperature $T_T$ without overshooting beyond an acceptable margin. "Substantially the target temperature $T_T$" may be a temperature within a margin to the target temperature $T_T$ that may be pre-determined for a given usage. The margin may depend on various parameters, such as, for example, the type of metal being heated, the type of heating device 110, etc. Accordingly, "substantially the target temperature $T_T$" may be set by the processor 210, by the user using any of the input devices 242, or via commands received with the communication interface 230.

As examples, the margin for an application may be within 5% of the target temperature $T_T$ in one case, 2% of the target temperature $T_T$ in another case, 1% of the target temperature $T_T$ in another case, etc. Therefore, as the margin may differ for different cases, the specific margins given as examples above do not limit any examples of the disclosure.

The heating period used may be variable in some examples of the disclosure while other examples of the disclosure may have a fixed period. That is, the heating period may change while heating the workpiece 130 or the heating period may remain the same for a first workpiece 130 but may be changed for a second workpiece 130. The heating period may be timed via a software timer in, for example, the operating system 222 or the applications 224, or a hardware timer that may be a part of, for example, the control circuitry 105.

A single timer may be used for monitoring the temperature of the workpiece 130 and for using the temperature ramp rate in heating the workpiece 130, or independent timers may be used. The workpiece 130 may be heated to an interim temperature $T_I$ that is raised, for example, periodically based on the temperature ramp rate.

In block 522, the control circuitry 105 enables the heating device 110 to heat the workpiece 130 to the target temperature $T_T$ using the temperature ramp rate. An example of the disclosure may increase a target temperature of the workpiece 130 to an interim temperature $T_I$ periodically until the interim temperature $T_I$ equals the target temperature $T_T$. Accordingly, the heating device 110 can heat the workpiece 130 according to the increasing interim temperature $T_I$ until the target temperature $T_T$ is reached.

In block 524, during heating to the target temperature $T_T$ using the temperature ramp rate, the control circuitry 105 determines whether the current selected temperature $T_S$ decreases, which can indicate a decoupling of the selected control sensor 120 from the workpiece. If there is a decrease in the selected current temperature TS (block 524), control returns to block 502 to restart the characterization process using one or more different sensors as the selected current temperature $T_S$. For example, a user may select a different set of one or more sensors, and/or the one or more sensors may be automatically selected.

If there is not a decrease in the selected current temperature TS (block 524), in block 526 the control circuitry 105 determines whether the selected current temperature $T_S$ is greater than or equal to the target temperature $T_T$. If the selected current temperature $T_S$ is less than the target temperature $T_T$ (block 526), control returns to block 522 to continue to controlling the heating device 110.

When the selected current temperature $T_S$ is greater than or equal to the target temperature $T_T$ (block 526), in block 528, the heating device 110 is disabled.

While an example flow diagram is shown in FIG. 5 for illustrative purposes, it should be understood that various other flow diagrams may also describe other examples of the disclosure. For example, in another example of the disclosure, the blocks 506 and 508 may happen serially in either order rather than in parallel as shown in FIG. 5.

While the disclosure has described various examples with respect to welding, it should be understood that the disclosure need not be so limited. Rather, the disclosure should be understood to apply to other situations where an item needs to be heated or pre-heated.

While the present invention has been described with reference to certain examples and/or aspects, it will be understood by those skilled in the art that various changes may be made and equivalents may be substituted without departing from the scope of the present invention as defined in the appended claims.

**Claims**

1. A system (100) for controlling heating of a workpiece (130), comprising:

   a heating device (110) and one or more temperature sensors (120);
   an interface (230, 242) configured to receive a target temperature ($T_T$) for the workpiece;
   the system being **characterised by**:

   a processor (210) configured to:

   select a current temperature ($T_S$) for the workpiece based on monitoring one or more temperature sensors; and
   set a control temperature ($T_C$) based on the received target temperature and the selected current temperature ($T_S$); and

   a control system (105; 200) configured to:
   control heating of the workpiece via a heating device until the workpiece reaches the control temperature ($T_C$) as measured by at least one of the one or more temperature sensors, and control the heating device to stop heating the workpiece in response to the workpiece reaching the control temperature ($T_C$); and then control heating of the workpiece via the heating device to the received target temperature ($T_T$);wherein:

   the processor is configured to characterize a temperature ramp rate based on a measured temperature overshoot at the workpiece after turning off the heating device; and
   the control system is configured to control heating of the workpiece to the received target temperature ($T_T$) by controlling the heating device based on the temperature ramp rate;

   and the control system (105; 200) being configured to:
   determine whether the selected current temperature ($T_S$) decreases during heating of the workpiece (130) via the heating device (110) to the received target temperature ($T_T$).

2. The system (100) of claim 1, wherein the processor (210) is configured to set the control temperature ($T_C$) to a temperature between the selected current temperature and the received target temperature ($T_T$).

3. The system (100) of claim 1, wherein the processor (210) is configured to select the current temperature for the workpiece (130) based on a selection of at least one of the one or more temperature sensors (120) via the interface (230, 242).

4. The system (100) of claim 1, wherein the processor (210) is configured to:
   update the characterization of the temperature ramp rate in response to a change in the selected current temperature or a change in the one or more temperature sensors (120).

5. The system (100) of claim 1, wherein the heating device (110) is configured to heat the workpiece using induction.

6. The system (100) of claim 1, comprising a communication device configured to receive the target temperature ($T_T$) via one or more of user interface (230, 242), wired communication from another device, and wireless communication from another device.

7. The system (100) of claim 1, wherein the processor (210) is configured to perform one or both of:

   monitor the outputs of the one or more temperature sensors (120) at an expiration of a first time timer, and control updating an interim temperature ($T_I$) based on the temperature ramp rate at an expiration of a second timer, wherein the control system (105, 200) is configured to heat the workpiece (130) to the interim temperature ($T_I$).

8. The system (100) of claim 1, wherein the control system (105, 200) is configured to control the heating device (110)

based on the received target temperature ($T_T$), the temperature ramp rate, and feedback based on the outputs of the one or more temperature sensors (120).

9. The system (100) of claim 1, wherein the processor (105, 200) is configured to output an alarm or alert in response to detecting at least a threshold reduction in the selected current temperature while the heating device (110) is heating the workpiece (130).

10. The system (100) of claim 1, wherein the processor (210) is configured to select the current temperature for the workpiece (130) as a highest temperature measured by the one or more temperature sensors (120).

11. The system (100) of claim 1, wherein the one or more temperature sensors (120) comprise at least one of an armored temperature sensing device, a spot-welded temperature sensing device, a thermocouple, or an infrared temperature sensor.

**Patentansprüche**

1. System (100) zum Steuern der Erwärmung eines Werkstücks (130), aufweisend:

eine Heizvorrichtung (110) und einen oder mehrere Temperatursensoren (120);
eine Schnittstelle (230, 242), die so konfiguriert ist, dass sie eine Zieltemperatur ($T_T$) für das Werkstück empfängt;
wobei das System **gekennzeichnet ist durch**:

einen Prozessor (210), der für Folgendes konfiguriert ist:

Auswählen einer aktuellen Temperatur ($T_S$) für das Werkstück basierend auf der Überwachung eines oder mehrerer Temperatursensoren; und
Einstellen einer Kontrolltemperatur ($T_C$) basierend auf der empfangenen Zieltemperatur und der ausgewählten aktuellen Temperatur ($T_S$); und

ein Steuersystem (105, 200), das für Folgendes konfiguriert ist:

Steuern des Erwärmens des Werkstücks über eine Heizvorrichtung, bis das Werkstück die Kontrolltemperatur ($T_C$) erreicht, wie sie **durch** mindestens einen der einen oder mehreren Temperatursensoren gemessen wird, und Steuern der Heizvorrichtung, um das Erwärmen des Werkstücks als Reaktion auf das Erreichen der Kontrolltemperatur ($T_C$) zu stoppen; und dann
Steuern des Erwärmens des Werkstücks über die Heizvorrichtung auf die empfangene Zieltemperatur ($T_T$); wobei:

der Prozessor dazu konfiguriert ist, eine Temperaturrampengeschwindigkeit basierend auf einem gemessenen Temperaturüberschwingen an dem Werkstück nach dem Abschalten der Heizvorrichtung zu charakterisieren; und
das Steuersystem dazu konfiguriert ist, das Erwärmen des Werkstücks auf die empfangene Zieltemperatur ($T_T$) **durch** Steuern der Heizvorrichtung basierend auf der Temperaturrampengeschwindigkeit zu steuern;

und das Steuersystem (105, 200) für Folgendes konfiguriert ist:
Bestimmen, ob die ausgewählte aktuelle Temperatur ($T_S$) während des Erwärmens des Werkstücks (130) über die Heizvorrichtung (110) auf die empfangene Zieltemperatur ($T_T$) ABNIMMT.

2. System (100) nach Anspruch 1, wobei der Prozessor (210) so konfiguriert ist, dass er die Kontrolltemperatur ($T_C$) auf eine Temperatur zwischen der ausgewählten aktuellen Temperatur und der empfangenen Zieltemperatur ($T_T$) EINSTELLT.

3. System (100) nach Anspruch 1, wobei der Prozessor (210) so konfiguriert ist, dass er die aktuelle Temperatur für das Werkstück (130) basierend auf einer Auswahl von mindestens einem der einen oder mehreren Temperatursensoren (120) über die Schnittstelle (230, 242) auswählt.

4. Steuersystem (100) nach Anspruch 1, wobei der Prozessor (210) für Folgendes konfiguriert ist:
Aktualisieren der Charakterisierung der Temperaturrampengeschwindigkeit als Reaktion auf eine Änderung der ausgewählten aktuellen Temperatur oder eine Änderung an dem einen oder den mehreren Temperatursensoren (120).

5. System (100) nach Anspruch 1, wobei die Heizvorrichtung (110) so konfiguriert ist, dass sie das Werkstück unter Verwendung von Induktion erwärmt.

6. System (100) nach Anspruch 1, das eine Kommunikationsvorrichtung aufweist, die so konfiguriert ist, dass sie die Zieltemperatur ($T_T$) über eines oder mehrere von Benutzerschnittstellen (230, 242), drahtgebundener Kommunikation von einer anderen Vorrichtung und drahtloser Kommunikation von einer anderen Vorrichtung empfängt.

7. System (100) nach Anspruch 1, wobei der Prozessor (210) zur Ausführung einer oder beider der folgenden Aufgaben konfiguriert ist:

   Überwachen der Ausgänge des einen oder der mehreren Temperatursensoren (120) bei Ablauf eines ersten Zeittimers, und
   Steuern des Aktualisierens einer Zwischentemperatur ($T_I$) basierend auf der Temperaturrampengeschwindigkeit beim Ablauf eines zweiten Timers, wobei das Steuersystem (105, 200) so konfiguriert ist, das es das Werkstück (130) auf die Zwischentemperatur ($T_I$) erwärmt.

8. System (100) nach Anspruch 1, wobei das Steuersystem (105, 200) so konfiguriert ist, dass es die Heizvorrichtung (110) basierend auf der empfangenen Zieltemperatur ($T_T$), der Temperaturrampengeschwindigkeit und der Rückkopplung basierend auf den Ausgaben des einen oder der mehreren Temperatursensoren (120) steuert.

9. System (100) nach Anspruch 1, wobei das Steuersystem (105, 200) so konfiguriert ist, dass er einen Alarm oder eine Warnung als Reaktion auf das Erfassen mindestens einer Schwellenwertverringerung der ausgewählten aktuellen Temperatur ausgibt, während die Heizvorrichtung (110) das Werkstück (130) erwärmt.

10. System (100) nach Anspruch 1, wobei der Prozessor (210) konfiguriert ist, dass er die aktuelle Temperatur für das Werkstück (130) als diejenige höchste Temperatur auswählt, die durch den einen oder die mehreren Temperatursensoren (120) gemessen wird.

11. System (100) nach Anspruch 1, wobei der eine oder die mehreren Temperatursensoren (120) mindestens eines aus einer gepanzerten Temperaturerfassungsvorrichtung, einer punktgeschweißten Temperaturerfassungsvorrichtung, einem Thermoelement oder einem Infrarottemperatursensor aufweist oder aufweisen.

**Revendications**

1. Système (100) pour commander le chauffage d'une pièce à usiner (130), comprenant :

   un dispositif de chauffage (110) et un ou plusieurs capteurs de température (120) ;
   une interface (230, 242) configurée pour recevoir une température cible ($T_I$) pour la pièce à usiner ;
   le système étant **caractérisé par** :

      un processeur (210) configuré pour :

         sélectionner une température actuelle ($T_S$) pour la pièce à usiner sur la base de la surveillance d'un ou de plusieurs capteurs de température ; et
         régler une température de commande ($T_C$) sur la base de la température cible reçue et de la température actuelle sélectionnée ($T_S$) ; et

      un système de commande (105 ; 200) configuré pour :

         commander le chauffage de la pièce à usiner par l'intermédiaire d'un dispositif de chauffage jusqu'à ce que la pièce à usiner atteigne la température de commande ($T_C$) telle que mesurée par l'au moins un des capteurs de température, et commander le dispositif de chauffage pour arrêter le chauffage de la pièce à usiner en réponse à la température de commande ($T_C$) atteinte par la pièce à usiner ; et ensuite commander le chauffage de la pièce à usiner via le dispositif de chauffage jusqu'à la température cible reçue ($T_I$) ; dans lequel :

le processeur est configuré pour caractériser une vitesse de rampe de température sur la base d'un dépassement de température mesuré au niveau de la pièce à usiner après la mise hors tension du dispositif de chauffage ; et
le système de commande est configuré pour commander le chauffage de la pièce à usiner à la température cible reçue ($T_I$) en commandant le dispositif de chauffage sur la base de la vitesse de rampe de température ;

et le système de commande (105 ; 200) étant configuré pour :

déterminer si la température actuelle sélectionnée ($T_S$) diminue pendant le chauffage de la pièce à usiner (130) via le dispositif de chauffage (110) jusqu'à la température cible reçue ($T_T$).

2. Système (100) selon la revendication 1, dans lequel le processeur (210) est configuré pour régler la température de commande ($T_C$) à une température comprise entre la température actuelle sélectionnée et la température cible reçue ($T_T$).

3. Système (100) selon la revendication 1, dans lequel le processeur (210) est configuré pour sélectionner la température actuelle pour la pièce à usiner (130) sur la base d'une sélection de l'au moins un des un ou plusieurs capteurs de température (120) via l'interface (230, 242).

4. Système (100) selon la revendication 1, dans lequel le processeur (210) est configuré pour :
mettre à jour la caractérisation de la vitesse de rampe de température en réponse à un changement de la température actuelle sélectionnée ou à un changement dans le ou les capteurs de température (120).

5. Système (100) selon la revendication 1, dans lequel le dispositif de chauffage (110) est configuré pour chauffer la pièce à usiner par induction.

6. Système (100) selon la revendication 1, comprenant un dispositif de communication configuré pour recevoir la température cible ($T_I$) par l'intermédiaire d'une ou plusieurs interfaces utilisateur (230, 242), une communication câblée provenant d'un autre dispositif, et une communication sans fil provenant d'un autre dispositif.

7. Système (100) selon la revendication 1, dans lequel le processeur (210) est configuré pour exécuter l'un ou les deux parmi :

surveiller les sorties du ou des capteurs de température (120) à l'expiration d'un premier temporisateur, et commander la mise à jour d'une température intermédiaire ($T_I$) sur la base de la vitesse de rampe de température à l'expiration d'un deuxième temporisateur, dans lequel le système de commande (105, 200) est configuré pour chauffer la pièce à usiner (130) à la température intermédiaire ($T_I$).

8. Système (100) selon la revendication 1, dans lequel le système de commande (105, 200) est configuré pour commander le dispositif de chauffage (110) sur la base de la température cible reçue ($T_T$), de la vitesse de rampe de température, et de la rétroaction sur la base des sorties du ou des capteurs de température (120).

9. Système (100) selon la revendication 1, dans lequel le système de commande (105, 200) est configuré pour émettre une alarme ou une alerte en réponse à la détection de l'au moins une réduction de seuil de la température actuelle sélectionnée pendant que le dispositif de chauffage (110) chauffe la pièce à usiner (130).

10. Système (100) selon la revendication 1, dans lequel le processeur (210) est configuré pour sélectionner la température actuelle de la pièce à usiner (130) comme la température la plus élevée mesurée par le ou les capteurs de température (120).

11. Système (100) selon la revendication 1, dans lequel le ou les capteurs de température (120) comprennent l'au moins un dispositif de détection de température blindé, un dispositif de détection de température soudé par points, un thermocouple ou un capteur de température infrarouge.

FIG. 1

Control circuitry
200

Processor
210

Comm. I/F 230

IO Module 240

Input devices 242

Output devices 244

Memory
220

OS 222

App. 224

NV memory 226

Volatile memory
228

FIG. 2

EP 4 043 136 B1

FIG. 3

From 310

$T_R > T_H$
by a preset number
of degrees?
402

No

Yes

$T_C =$
$T_H + m*(T_R - T_H)$

404

$T_C = T_R$

406

To 314

FIG. 4

400

EP 4 043 136 B1

FIG. 5

**EP 4 043 136 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2015334781 A1

- WO 2021035146 A1